# EUROPEAN PATENT APPLICATION

(11) **EP 4 738 573 A1**
(43) Date of publication of application: **06.05.2026**
(21) Application number: 23943459.0
(22) Date of filing: 22.12.2023
(51) Int. Cl.: H01M 50/244

(54) **CASE BODY, BATTERY AND ELECTRIC DEVICE**

(30) Priority: 30.06.2023 CN 202310799035
(71) Applicant: Contemporary Amperex Technology Co., Limited, Ningde, Fujian 352100 (CN)
(72) Inventor: WU, Kai, Ningde, Fujian 352100 (CN); ZHAO, Pengbo, Ningde, Fujian 352100 (CN); WANG, Yong, Ningde, Fujian 352100 (CN); ZHANG, Wei, Ningde, Fujian 352100 (CN); SHI, Weigang, Ningde, Fujian 352100 (CN)
(74) Representative: Ziebig Hengelhaupt Intellectual Property Attorneys Patentanwaltskanzlei PartGmbB
(86) International application number: PCT/CN2023/141238
(87) International publication number: WO 2025/000987

(57) **Abstract**

The present application discloses a box body, a battery and an electrical apparatus. The box body is applied to the battery. The box body includes a first box body, a second box body, a first sealing member and a position-limiting portion. The first box body has a first sealing surface. The second box body has a second sealing surface. The first sealing member is arranged between the first sealing surface and the second sealing surface so that the first sealing surface is in sealed connection with the second sealing surface. The position-limiting portion protrudes from the second sealing surface and is configured to limit the movement of the first sealing member. Technical solutions provided in the present application can improve the reliability of the battery.

## Description

### CROSS-REFERENCE TO RELATED APPLICATIONS

The present application claims priority to Chinese patent application No. 202310799035.5 filed on June 30, 2023 and entitled "BOX BODY, BATTERY AND ELECTRICAL APPARATUS", the entire content of which is incorporated herein by reference.

### TECHNICAL FIELD

The present application relates to the technical field of batteries, and in particular, to a box body, a battery and an electrical apparatus.

### BACKGROUND

With energy saving and emission reduction being the key to the sustainable development of the automobile industry, electric vehicles have become an important part of the sustainable development of the automotive industry due to their advantages of energy saving and environmental protection. The battery technology is an important factor related to the development of electric vehicles.

In the development of the battery technology, how to improve the reliability of batteries is an urgent technical problem to be solved in the battery technology.

### SUMMARY OF THE INVENTION

The present application provides a box body, a battery and an electrical apparatus. Technical solutions provided in the present application can improve the reliability of the battery.

The present application is implemented through the following technical solutions:

According to a first aspect, the present application provides a box body. The box body is applied to a battery. The box body includes a first box body, a second box body, a first sealing member and a position-limiting portion. The first box body has a first sealing surface. The second box body has a second sealing surface. The first sealing member is arranged between the first sealing surface and the second sealing surface so that the first sealing surface is in sealed connection with the second sealing surface. The position-limiting portion protrudes from the second sealing surface and is configured to limit the movement of the first sealing member.

In the above solution, by the position-limiting portion protruding from the second sealing surface, the movement of the first sealing member can be effectively limited to reduce the risk of sealing failure of the first sealing surface and the second sealing surface due to misalignment of the first sealing member during assembly of the box body, thereby making the box body more reliable and further improving the reliability of the battery.

According to some embodiments of the present application, the position-limiting portion includes a first position-limiting protrusion and a second position-limiting protrusion arranged at an interval, and the first sealing member is arranged between the first position-limiting protrusion and the second position-limiting protrusion.

In the above solution, by arranging the first position-limiting protrusion and the second position-limiting protrusion at an interval on the second sealing surface and locating the first position-limiting protrusion and the second position-limiting protrusion on two sides of the first sealing member, the movement of the first sealing member can be effectively limited to locate the first sealing member in a correct position to reduce the risk of sealing failure of the first sealing surface and the second sealing surface due to misalignment of the first sealing member during assembly of the box body, thereby making the box body more reliable and further improving the reliability of the battery.

According to some embodiments of the present application, the width of the first sealing member in a natural state is b. Along an interval direction of the first position-limiting protrusion and the second position-limiting protrusion, the minimum distance between the first position-limiting protrusion and the second position-limiting protrusion is B, satisfying b+2 mm≤B≤b+20 mm.

During assembly of the box body, the first box body and the second box body are connected to each other, and the first sealing member between the first sealing surface and the second sealing surface will be compressed, that is, in a natural state, the first sealing member is deformed and compressed by the action force of the first box body and the second box body, thereby increasing the width of the first sealing member. In the above solution, by defining the numerical relationship between the minimum distance B between the first position-limiting protrusion and the second position-limiting protrusion and the width b of the first sealing member in a natural state, the risk of reduction of the sealing effect caused by the damage to the first sealing member due to interference between the first sealing member after compression and the position-limiting portion can be effectively reduced, thereby making the box body more reliable and making the battery more reliable.

According to some embodiments of the present application, the thickness of the first sealing member in a natural state is h. The height of the position-limiting portion protruding from the second sealing surface is H1, satisfying 0.3 h≤H1≤0.7 h.

During assembly of the box body, the first box body and the second box body are connected to each other, and the first sealing member between the first sealing surface and the second sealing surface will be compressed, that is, in a natural state, the first sealing member is deformed and compressed by the action force of the first box body and the second box body, thereby reducing the height of the first sealing member. In the above solution, by defining the numerical relationship between the height H1 of the position-limiting portion protruding from the second sealing surface and the thickness h of the first sealing member in a natural state, the risk of reduction of the sealing effect caused by the damage to the first sealing surface due to interference between the position-limiting portion and the first sealing surface because of reduction of the height of the first sealing member after compression can be effectively reduced, thereby making the box body more reliable and making the battery more reliable.

According to some embodiments of the present application, the box body further includes a connecting element, and the first sealing surface and the second sealing surface are connected through the connecting element.

In the above solution, by providing the connecting element to connect the first sealing surface and the second sealing surface, the sealing effect of the first sealing surface and the second sealing surface can be effectively improved, and the stability of connection between the first sealing surface and the second sealing surface can be improved, thereby improving the structural stability of the box body and making the battery more reliable.

According to some embodiments of the present application, the projection of the connecting element does not coincide with the projection of the first sealing member along a direction perpendicular to the second sealing surface.

In the above solution, the first sealing member and the connecting element are staggered on a second sealing member and do not interfere with each other, which can reduce the interference of the connecting element on the first sealing member, so that the first sealing member can achieve an effective sealing effect between the first sealing surface and the second sealing surface to reduce the risk that the first sealing member is damaged due to the connecting element passing through the first sealing member and thus a seal cannot be achieved.

According to some embodiments of the present application, the first box body and the second box body together enclose to form a closed space for accommodating battery cells. The second sealing surface has a first edge close to the closed space and a second edge away from the closed space, and the first sealing member is closer to the first edge than the connecting element.

In the above solution, the first edge of the second sealing surface may be closer to the closed space than the second edge, that is, the side of the second sealing surface facing away from the second edge may be regarded as an inner side, and the side of the second sealing surface facing away from the first edge may be regarded as an outer side. Therefore, the first sealing member is closer to the first edge than the connecting element, which may mean that the first sealing member is located on the inner side compared to the connecting element. By arranging the first sealing member on the inner side compared to the connecting element, the first sealing member can still achieve a certain sealing effect after the connecting element is damaged and the connection fails, thereby making the box body more reliable and making the battery more reliable.

According to some embodiments of the present application, a through hole is formed in the first sealing surface, a threaded hole is formed in the second sealing surface, and the connecting element passes through the through hole and is in threaded fit with the threaded hole.

In the above solution, by forming the through hole in the first sealing surface and forming the threaded hole in the second sealing surface, the connecting element can effectively connect the first sealing surface and the second sealing surface by means of threaded connection to improve the sealing effect of the first sealing surface and the second sealing surface and the stability of connection between the first sealing surface and the second sealing surface, thereby making the box body more reliable and making the battery more reliable.

According to some embodiments of the present application, the connecting element includes a body and a first position-limiting body, one end of the body is connected to the first position-limiting body, the other end of the body is in threaded fit with the threaded hole, the cross-sectional area of the first position-limiting body is larger than the cross-sectional area of the body, and the first position-limiting body is in contact with a surface of the first box body facing away from the second sealing surface.

In the above solution, the connecting element includes a body and a first position-limiting body. By setting the cross-sectional area of the first position-limiting body to be larger than the cross-sectional area of the body, the surface of the first box body facing away from the second sealing surface can be effectively constrained, thereby improving the stability of connection between the first sealing surface and the second sealing surface and improving the structural stability of the box body.

According to some embodiments of the present application, the connecting element further includes a second position-limiting body, the second position-limiting body is arranged between the first position-limiting body and the body, the cross-sectional area of the first position-limiting body is larger than the cross-sectional area of the second position-limiting body, the cross-sectional area of the second position-limiting body is larger than the cross-sectional area of the body, and a portion of the second position-limiting body is located in the through hole and is in contact with the second sealing surface.

In the above solution, by arranging the second position-limiting body between the first position-limiting body and the body, setting the cross-sectional area of the second position-limiting body to be smaller than the cross-sectional area of the first position-limiting body and setting the cross-sectional area of the second position-limiting body to be larger than the cross-sectional area of the body, an end surface of the second position-limiting body facing away from the first position-limiting body can be in contact with the second sealing surface to limit the depth of the body locked into the threaded hole, thereby limiting the compression degree of the first sealing member. On the one hand, this can reduce the problem of the first sealing member being damaged due to an excessive force caused by an excessive locking depth, resulting in sealing failure. On the other hand, this can reduce the risk that the first sealing member does not play a sealing role or the sealing effect is poor due to an insufficient locking depth.

According to some embodiments of the present application, the first box body includes a first side wall, a through hole is formed in the first side wall, and the first position-limiting body is in contact with a surface of the first side wall facing away from the second sealing surface. The thickness of the first sealing member in a natural state is h, the thickness of the first side wall is d, and the length of the second position-limiting body is H2, satisfying 0.3 h+d≤H2≤0.7 h+d.

During assembly of the box body, the first box body and the second box body are connected to each other, and the first sealing member between the first sealing surface and the second sealing surface will be compressed, that is, in a natural state, the first sealing member is deformed and compressed by the action force of the first box body and the second box body, thereby reducing the height of the first sealing member. In the above solution, by defining the numerical relationship among the thickness d of the first side wall, the length H2 of the second position-limiting body, and the thickness h of the first sealing member in a natural state, the compression ratio of the first sealing member in the thickness direction thereof can be effectively controlled. On the one hand, this can reduce the problem of the first sealing member being damaged due to an excessive force caused by an excessive locking depth, resulting in sealing failure. On the other hand, this can reduce the risk that the first sealing member does not play a sealing role or the sealing effect is poor caused by an unsuitable compression ratio in the thickness direction due to an insufficient locking depth. Furthermore, by controlling the compression ratio of the first sealing member in the thickness direction thereof, the risk of damage to the first side wall due to an excessive locking reaction force on the first side wall can be reduced, thereby making the box body more reliable and making the battery more reliable.

According to some embodiments of the present application, the first sealing surface and the second sealing surface intersect with the horizontal plane.

In the above solution, the horizontal plane is a plane perpendicular to a vertical direction (in some embodiments, the vertical direction may also be parallel to a direction of gravity), and the first sealing surface and the second sealing surface are defined to intersect with the horizontal plane. That is, when the first sealing member is arranged on the second sealing surface, there is a risk that the first sealing member will slide relative to the second sealing surface due to the influence of gravity. Therefore, by the position-limiting portion protruding from the second sealing surface, the displacement of the first sealing member due to the influence of gravity can be effectively limited to reduce the risk of sealing failure of the first sealing surface and the second sealing surface due to misalignment of the first sealing member during assembly of the box body, thereby making the box body more reliable and further improving the reliability of the battery.

According to some embodiments of the present application, the first sealing surface and the second sealing surface are arranged perpendicular to the horizontal plane.

In the above solution, by limiting the first sealing surface and the second sealing surface to be perpendicular to the horizontal plane, on the one hand, the space in a horizontal direction occupied by the interconnection between the first box body and the second box body can be saved, and the space occupation ratio of the box body can be reduced. On the other hand, by the position-limiting portion protruding from the second sealing surface, the gravity of the first sealing member can be effectively overcome to locate the first sealing member in a correct position to reduce the risk of sealing failure of the first sealing surface and the second sealing surface due to misalignment of the first sealing member during assembly of the box body, thereby making the box body more reliable and further improving the reliability of the battery.

According to some embodiments of the present application, the first box body includes a first end wall and a first side wall. The second box body includes a second end wall, the second end wall is arranged opposite to the first end wall along a first direction, the second box body has a second sealing surface in a second direction, the first direction intersects with the second direction, and the second direction is parallel to the horizontal plane, wherein one end of the first side wall is connected to the first end wall, and the other end of the first side wall has a first sealing surface.

In the above solution, by connecting the first sealing surface at one end of the first side wall of the first box body with the second sealing surface of the second box body, the connection between the first box body and the second box body is achieved, so as to achieve the connection between the first box body and the second box body without providing a flange structure protruding along a second direction, thereby improving the space utilization ratio of the battery in the second direction to accommodate more battery cells or reduce the volume of the battery, and further improving the volumetric energy density of the battery.

According to some embodiments of the present application, the position-limiting portion includes a first position-limiting protrusion, and the first sealing member is closer to the first end wall than the first position-limiting protrusion along a first direction.

In the above solution, the position-limiting portion may include the first position-limiting protrusion. By arranging the first position-limiting protrusion to be farther away from the first end than the first sealing member, the gravity of the first sealing member can be effectively overcome to limit the displacement of the first sealing member, so as to reduce the risk of sealing failure of the first sealing surface and the second sealing surface due to misalignment of the first sealing member during assembly of the box body, thereby making the box body more reliable and further improving the reliability of the battery.

According to some embodiments of the present application, the first position-limiting protrusion extends from one end of the second sealing surface to the other end along a third direction, and the third direction, the first direction and the second direction are perpendicular to each other.

In the above solution, by configuring the first position-limiting protrusion to extend along a third direction and extend from one end of the second sealing surface to the other end, the displacement of the first sealing member at any part in the third direction can be effectively limited to reduce the risk of sealing failure of the first sealing surface and the second sealing surface due to misalignment of the first sealing member during assembly of the box body, thereby making the box body more reliable and further improving the reliability of the battery.

According to some embodiments of the present application, the position-limiting portion further includes a second position-limiting protrusion, the first position-limiting protrusion and the second position-limiting protrusion are oppositely arranged at an interval along a first direction, and the first sealing member is arranged between the first position-limiting protrusion and the second position-limiting protrusion.

In the above solution, by providing the second position-limiting protrusion and arranging the second position-limiting protrusion and the first position-limiting protrusion oppositely at an interval along a first direction, the displacement of the first sealing member in the first direction can be effectively limited to reduce the risk of sealing failure of the first sealing surface and the second sealing surface due to misalignment of the first sealing member during assembly of the box body, thereby making the box body more reliable and further improving the reliability of the battery.

According to some embodiments of the present application, the second position-limiting protrusion extends from one end of the second sealing surface to the other end along a third direction, and the third direction, the first direction and the second direction are perpendicular to each other.

In the above solution, by configuring the second position-limiting protrusion to extend along a third direction and extend from one end of the second sealing surface to the other end, the displacement of the first sealing member at any part in the third direction can be effectively limited to reduce the risk of sealing failure of the first sealing surface and the second sealing surface due to misalignment of the first sealing member during assembly of the box body, thereby making the box body more reliable and further improving the reliability of the battery.

According to some embodiments of the present application, there are two first side walls, and the two first side walls are arranged oppositely along a second direction. The second end wall is located between the two first side walls, the second box body has two second sealing surfaces arranged oppositely along a second direction, and the second sealing surfaces are in one-to-one correspondence to the first side walls.

In the above solution, two sides of the box body are respectively provided with the first sealing surface and the second sealing surface along a second direction, that is, two sides of the first box body and the second box body in the second direction are respectively connected through the corresponding first sealing surface and second sealing surface, so as to achieve the connection between the first box body and the second box body without providing flange structures protruding along a second direction on both sides of the box body, thereby improving the space utilization ratio of the battery in the second direction to accommodate more battery cells or reduce the volume of the battery, and further improving the volumetric energy density of the battery.

According to some embodiments of the present application, openings are respectively formed at two ends of the first box body along a third direction, and the first direction, the second direction and the third direction are perpendicular to each other. The second box body further includes two second side walls, the two second side walls are oppositely arranged at an interval in a third direction and are connected to the second end wall, and the two second side walls respectively seal the two openings.

In the above solution, by providing the second side wall, on the one hand, components such as explosion-proof valves, water-cooling connectors, or high and low voltage connectors can be mounted on the second side wall to ensure normal charging and discharging operations of the battery; and on the other hand, compared to the flange structure protruding along a third direction between the first box body and the second box body, by providing a third side wall to seal the opening, the space utilization ratio of the battery in the third direction can be improved, and the volumetric energy density of the battery can be improved.

According to some embodiments of the present application, the box body further includes a second sealing member; and the second side wall has a third sealing surface, the first box body has a fourth sealing surface, and the second sealing member is arranged between the third sealing surface and the fourth sealing surface, so that the third sealing surface is in sealed connection with the fourth sealing surface.

In the above solution, by arranging the second sealing member between the third sealing surface and the fourth sealing surface, the sealing performance between the second side wall and the first box body can be improved, thereby improving the sealing performance of the box body and making the battery more reliable.

According to some embodiments of the present application, two ends of the first sealing member are respectively connected to two second sealing members.

In the above solution, the first sealing member and the second sealing member may be integrally formed or may be connected separately. By providing the first sealing member and the second sealing member, good sealing performance can be achieved between the first box body and the second box body, thereby improving the reliability of the battery.

According to a second aspect, some embodiments of the present application further provide a battery, the battery includes battery cells and the box body provided in any item of the first aspect, and the battery cells are accommodated in the box body.

In the above solution, because the second sealing surface in the box body is provided with the position-limiting portion to limit the position of the first sealing member, the box body has good sealing performance, which can effectively protect the battery cells in the box body and make the battery more reliable.

According to a third aspect, some embodiments of the present application further provide an electrical apparatus, including a battery in a second direction, and the battery is configured to provide electric energy.

The foregoing descriptions are merely an overview of the technical solutions of the present application. To understand the technical means of the present application more clearly, implementation can be performed according to the content of the specification. Moreover, to make the foregoing and other objectives, features and advantages of the present application more comprehensible, specific embodiments of the present application are particularly described below.

### DESCRIPTION OF DRAWINGS

In order to illustrate the technical solutions in the embodiments of the present application more clearly, the following briefly introduces the accompanying drawings required in the embodiments. It should be understood that the following accompanying drawings only show some embodiments of the present application, and therefore should not be considered as limiting the scope of the present application. Those of ordinary skill in the art can also obtain other relevant accompanying drawings according to these accompanying drawings without creative efforts.
FIG. 1 is a schematic view of a vehicle in some embodiments of the present application;
FIG. 2 is a schematic view of an internal structure of a battery provided in some embodiments of the present application;
FIG. 3 is a three-dimensional view of a box body in some embodiments of the present application;
FIG. 4 is a three-dimensional exploded view of a box body in some embodiments of the present application;
FIG. 5 is an internal schematic view of a partial structure of a box body in some embodiments of the present application;
FIG. 6 is a schematic view of a partial structure of a second box body in some embodiments of the present application;
FIG. 7 is a schematic view of a first sealing member in some embodiments of the present application;
FIG. 8 is an enlarged view of a part A in FIG. 4;
FIG. 9 is a schematic view of a first position-limiting portion, a second sealing surface and a first sealing member in some embodiments of the present application; and
FIG. 10 is a schematic view of a first sealing member and a second sealing member in some embodiments of the present application.

Icons: 100-box body; 100a-closed space; 10-first box body; 11-first sealing surface; 110-through hole; 12-first side wall; 13-first end wall; 14-fourth sealing surface; 20-second box body; 21-second sealing surface; 210-first edge; 211-second edge; 212-threaded hole; 22-second end wall; 23-second side wall; 230-third sealing surface; 30-first sealing member; 31-second sealing member; 40-position-limiting portion; 41-first position-limiting protrusion; 42-second position-limiting protrusion; 50-connecting element; 51-body; 52-first position-limiting body; 53-second position-limiting body; z-first direction; x-second direction; y-third direction; 1000-vehicle; 2000-battery; 2001-battery cell; 200-controller; 300-motor.

### DETAILED DESCRIPTION

Embodiments of the present application are further described in detail below with reference to the accompanying drawings and embodiments. The following detailed description of the embodiments and the accompanying drawings are used to illustrate the principles of the present application by way of example, but should not be used to limit the scope of the present application, that is, the present application is not limited to the described embodiments.

Unless otherwise defined, all technical and scientific terms used herein have the same meaning as commonly understood by those skilled in the art belonging to the technical field of the present application. The terms used herein are intended only for the purpose of describing specific embodiments and are not intended to limit the present application. The terms "including" and "having" and any variations thereof in the specification and claims of the present application and in the description of the above accompanying drawings are intended to cover non-exclusive inclusion.

In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiments of the present application, the meaning of "a plurality of' is two or more, unless otherwise explicitly and specifically defined.

The "embodiment" mentioned herein means that specific features, structures, or characteristics described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may have three relationships, for example, A and/or B may mean: the presence of A, the presence of both A and B, and the presence of B. In addition, the character "/" herein generally means that there is an "or" relationship between associated objects therebefore and thereafter.

In the description of the embodiments of the present application, the term "a plurality of' means more than two (including two).

In the description of the embodiments of the present application, the technical terms "length", "width", "thickness", "top", "bottom", and the like indicate orientations or positional relationships based on the orientations or positional relationships shown in the accompanying drawings, and are intended only to facilitate and simplify the description of the embodiments of the present application, and are not intended to indicate or imply that the apparatus or element referred to must have a particular orientation, or be constructed and operated in a particular orientation, and therefore should not be construed as limitation of the embodiments of the present application.

In the description of the embodiments of the present application, unless otherwise explicitly specified and defined, the technical terms "mount," "couple," "connect," "fix", etc., should be understood in a broad sense, for example, a fixed connection, a detachable connection, or an integral connection; or a mechanical connection, or an electrical connection; or a direct connection, an indirect connection through an intermediate medium, an internal communication of two elements, or interaction between two elements. For those of ordinary skill in the art, the specific meanings of the above terms in the embodiments of the present application can be understood according to specific situations.

The battery mentioned in the embodiments of the present application refers to a single physical module including one or more battery cells to provide a higher voltage and capacity. For example, the battery mentioned in the present application may include one or more battery cells. The battery further includes a box body. The box body includes a first box body and a second box body. The first box body and the second box body are connected together to enclose to form a closed space, and the battery cells are arranged in the closed space. To improve the reliability of the battery and reduce the risk of damage to battery cells caused by liquids or other foreign objects entering the box body, a first sealing member may also be arranged between the first box body and the second box body. For example, a first sealing member is arranged between a first sealing surface of the first box body and a second sealing surface of the second box body. The elastic or plastic deformation of the first sealing member fills the uneven parts on the first sealing surface and the second sealing surface to achieve a sealed connection between the first sealing surface and the second sealing surface.

The development of battery technologies needs to take many design factors into consideration at the same time, for example, performance parameters such as battery life, energy density, discharge capacity, and charge-discharge rate. In addition, the reliability of the battery also needs to be taken into consideration. During assembly of the battery, the first sealing member is first placed on the second sealing surface of the second box body, then the first box body is placed on the second box body, and then bolts are used to connect the first box body to the second box body through the through holes of the first box body and the first sealing member. However, since the first sealing member is placed directly on the second sealing surface, the first sealing member is susceptible to displacement due to gravity or other external impacts before locking bolts to connect the first box body to the second box body, resulting in an ineffective seal between the first sealing member and the second sealing member, which affects the reliability of the battery.

In view of this, in order to solve the problem that the first sealing member is susceptible to displacement due to gravity or other external impacts, resulting in an ineffective seal between the first box body and the second box body, which affects the reliability of the battery, some embodiments of the present application provide a box body, and the box body includes a first box body, a second box body and a first sealing member. A position-limiting portion protrudes from the second sealing surface of the second box body to limit the movement of the first sealing member.

In the above solution, by the position-limiting portion protruding from the second sealing surface, the movement of the first sealing member due to gravity or other impacts can be effectively limited to reduce the risk of sealing failure of the first sealing surface and the second sealing surface due to misalignment of the first sealing member, thereby making the box body more reliable and further improving the reliability of the battery.

The box body disclosed in the embodiments of the present application includes, but is not limited to, structures used for batteries or for storing other workpieces or components.

The battery disclosed in the embodiments of the present application may be used, without limitation, in an electrical apparatus, such as a vehicle, a ship, or an aircraft.

An embodiment of the present application provides an electrical apparatus using a battery as a power source. The electrical apparatus may be, but is not limited to, a mobile phone, a tablet personal computer, a laptop computer, an electric toy, an electric tool, an electric bicycle, an electric motorcycle, an electric automobile, a ship, a heavy truck, a bus, a spacecraft, or the like. The electric toy may include a fixed or mobile electric toy, such as a game machine, an electric automobile toy, an electric ship toy, or an electric aircraft toy. The spacecraft may include an aircraft, a rocket, a space shuttle, a spacecraft, or the like.

For the convenience of description in the following embodiments, an electrical apparatus according to an embodiment of the present application being a vehicle 1000 is taken as an example for description.

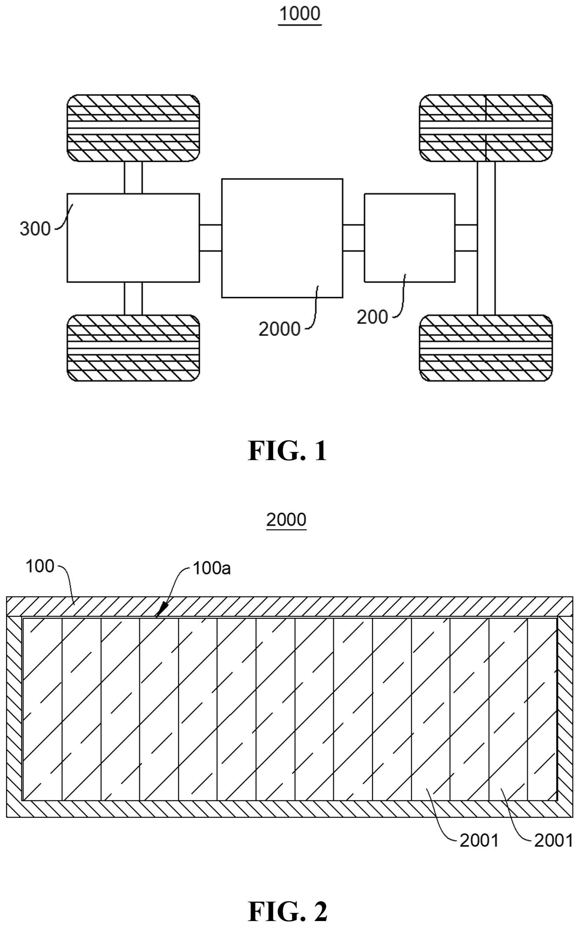

Referring to FIG. 1, FIG. 1 is a schematic view of a vehicle in some embodiments of the present application. The vehicle 1000 may be a fuel vehicle, a gas vehicle, or a new energy vehicle. The new energy vehicle may be an all-electric vehicle, a hybrid electric vehicle, an extended range electric vehicle, or the like. The type of the vehicle 1000 may be a sedan, SUV, heavy truck, bus, or the like. A battery 2000 is arranged inside the vehicle 1000, and the battery 2000 may be arranged at the bottom, head or tail of the vehicle 1000. The battery 2000 may be used for supplying power to the vehicle 1000. For example, the battery 2000 may be used as an operating power source of the vehicle 1000, which is used for a circuit system of the vehicle 1000, for example, for operating power requirements of the vehicle 1000 during starting, navigation and running.

The vehicle 1000 may further include a controller 200 and a motor 300. The controller 200 is configured to control the battery 2000 to supply power to the motor 300, for example, to satisfy the operating power requirements of the vehicle 1000 during starting, navigation and running.

In some embodiments of the present application, the battery 2000 may not only be used as an operating power source for the vehicle 1000, but also as a driving power source for the vehicle 1000, to replace or partially replace fuel or natural gas to provide driving power for the vehicle 1000.

Referring to FIG. 2, FIG. 2 is a schematic view of an internal structure of a battery 2000 provided in some embodiments of the present application. The battery 2000 includes a box body 100 and battery cells 2001, and the battery cells 2001 are accommodated in the box body 100. The box body 100 is configured to provide a closed space 100a for the battery cells 2001 to reduce the risk of damage to the battery cells 2001 caused by liquids or other foreign objects entering the box body 100.

In the battery 2000, a plurality of battery cells 2001 may be provided, and the plurality of battery cells 2001 may be connected in series, parallel or series and parallel. The series and parallel connection refers to both series connection and parallel connection in the plurality of battery cells 2001. The plurality of battery cells 2001 may be directly connected in series, parallel or series and parallel together, and then, the whole formed by the plurality of battery cells 2001 is accommodated in the box body 100. Certainly, the battery 2000 may also be in the form of a battery module composed of a plurality of battery cells 2001 connected in series, parallel or series and parallel first, and then, a plurality of battery modules are connected in series, parallel or series and parallel to form a whole which is accommodated in the box body 100. The battery 2000 may further include other structures. For example, the battery 2000 may further include a bus component for realizing electrical connection among the plurality of battery cells 2001.

Each battery cell 2001 may be a secondary battery cell or a primary battery cell, or may be a lithium-sulfur battery cell, a sodium-ion battery cell or a magnesium-ion battery cell, but is not limited thereto. The battery cell 2001 may be in a cylindrical shape, a flat shape, a cuboid shape, or other shapes.

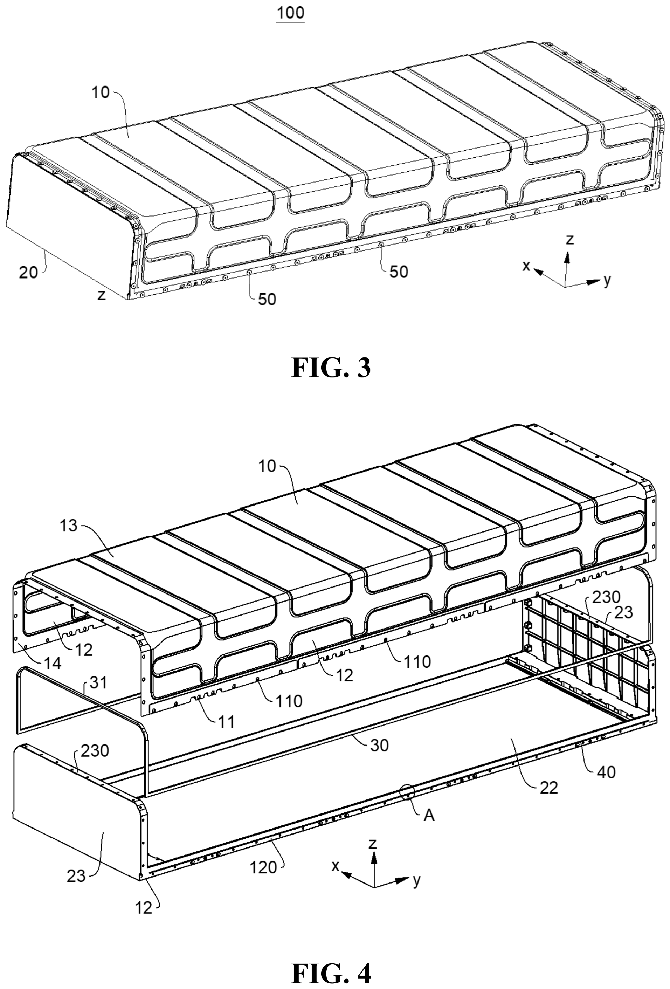

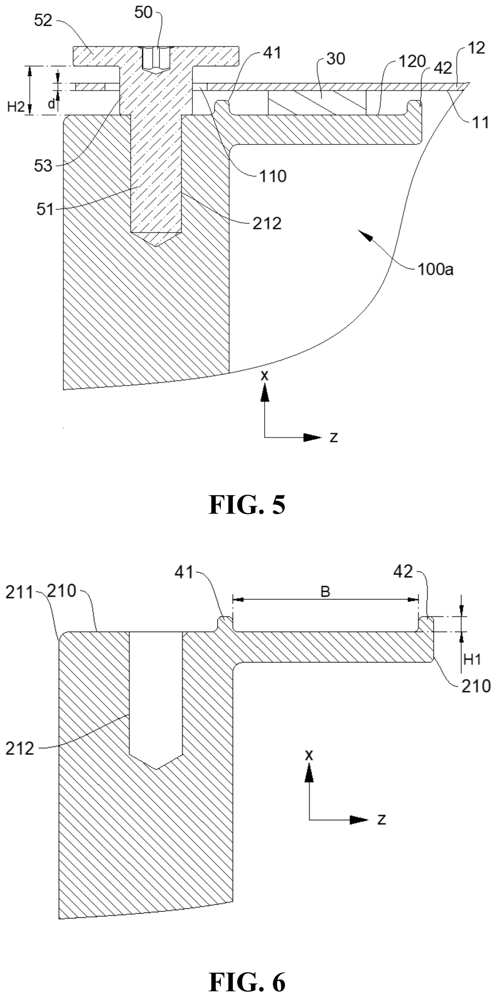

According to some embodiments of the present application, a box body 100 is provided. The box body 100 may be applied to a battery 2000. Referring to FIG. 3 to FIG. 5, FIG. 3 is a three-dimensional view of a box body 100 in some embodiments of the present application, FIG. 4 is a three-dimensional exploded view of a box body 100 in some embodiments of the present application, and FIG. 5 is an internal schematic view of a partial structure of a box body 100 in some embodiments of the present application.

The box body 100 includes a first box body 10, a second box body 20, a first sealing member 30 and a position-limiting portion 40. The first box body 10 has a first sealing surface 11. The second box body 20 has a second sealing surface 21. The first sealing member 30 is arranged between the first sealing surface 11 and the second sealing surface 21 so that the first sealing surface 11 is in sealed connection with the second sealing surface 21. The position-limiting portion 40 protrudes from the second sealing surface 21 and is configured to limit the movement of the first sealing member 30.

In some embodiments, the first box body 10 and the second box body 20 are connected to each other to form a closed space 100a for accommodating battery cells 2001. In some embodiments, the first box body 10 may be regarded as an upper box body of the battery 2000, that is, the first box body 10 is located above the second box body 20 in the direction of gravity. The second box body 20 may be regarded as a lower box body of the battery 2000, that is, the second box body 20 is located below the first box body 10 in the direction of gravity. In some embodiments, the first box body 10 may also be made of various materials, such as copper, iron, aluminum, stainless steel, aluminum alloy, and plastic. In some embodiments, the first box body 10 may also be made of various materials, such as copper, iron, aluminum, stainless steel, aluminum alloy, and plastic. In some embodiments, the first box body 10 and the second box body 20 may be made of the same or different materials.

The first sealing surface 11 is a surface of the first box body 10 for sealed connection with the second sealing surface 21 of the second box body 20 to form a closed space 100a. The second sealing surface 21 is a surface of the second box body 20 for sealed connection with the first sealing surface 11 of the first box body 10 to form a closed space 100a.

The first sealing member 30 is arranged between the first sealing surface 11 and the second sealing surface 21. The first sealing member 30 is subjected to a force to elastically or plastically deform to fill the uneven parts on the first sealing surface 11 and the second sealing surface 21, so as to achieve a sealed connection between the first sealing surface 11 and the second sealing surface 21. In some embodiments, the material of the first sealing member 30 may be a material such as plastic or rubber that is capable of generating plastic or elastic deformation. In some embodiments, the first sealing member 30 may be sheet-shaped. For example, the first sealing member 30 may be a first sealing gasket.

In some embodiments, the first sealing member 30 is arranged between the first sealing surface 11 and the second sealing surface 21, the first sealing surface 11 and the second sealing surface 21 may be connected to each other by means of bonding, welding or bolted connection, and the first sealing member 30 generates plastic or elastic deformation to achieve a sealed connection between the first sealing surface 11 and the second sealing surface 21.

The position-limiting portion 40 is a component arranged on the second sealing surface 21 and protruding from the second sealing surface 21 along a direction pointing from the second sealing surface 21 to the first sealing surface 11.

In some embodiments, the position-limiting portion 40 and the second box body 20 may be integrally formed. In some other embodiments, the position-limiting portion 40 may be arranged on the second sealing surface 21 by means of bonding, welding or bolted connection after the second box body 20 is manufactured.

In the above solution, by the position-limiting portion 40 protruding from the second sealing surface 21, the movement of the first sealing member 30 can be effectively limited to reduce the risk of sealing failure of the first sealing surface 11 and the second sealing surface 21 due to misalignment of the first sealing member 30 during assembly of the box body 100, thereby making the box body 100 more reliable and further improving the reliability of the battery 2000.

According to some embodiments of the present application, referring to FIG. 5 and FIG. 6, FIG. 6 is a schematic view of a partial structure of a second box body 20 in some embodiments of the present application. The position-limiting portion 40 includes a first position-limiting protrusion 41 and a second position-limiting protrusion 42 arranged at an interval, and the first sealing member 30 is arranged between the first position-limiting protrusion 41 and the second position-limiting protrusion 42.

The first position-limiting protrusion 41 and the second position-limiting protrusion 42 are both arranged on the second sealing surface 21, and both protrude from the second sealing surface 21 along a direction pointing from the second sealing surface 21 to the first sealing surface 11. The first position-limiting protrusion 41 and the second position-limiting protrusion 42 are arranged at an interval, and the first sealing member 30 may be arranged between a first position-limiting member and a second position-limiting member.

In the above solution, by arranging the first position-limiting protrusion 41 and the second position-limiting protrusion 42 at an interval on the second sealing surface 21 and locating the first position-limiting protrusion 41 and the second position-limiting protrusion 42 on two sides of the first sealing member 30, the movement of the first sealing member 30 can be effectively limited to locate the first sealing member 30 in a correct position to reduce the risk of sealing failure of the first sealing surface 11 and the second sealing surface 21 due to misalignment of the first sealing member 30 during assembly of the box body 100, thereby making the box body 100 more reliable and further improving the reliability of the battery 2000.

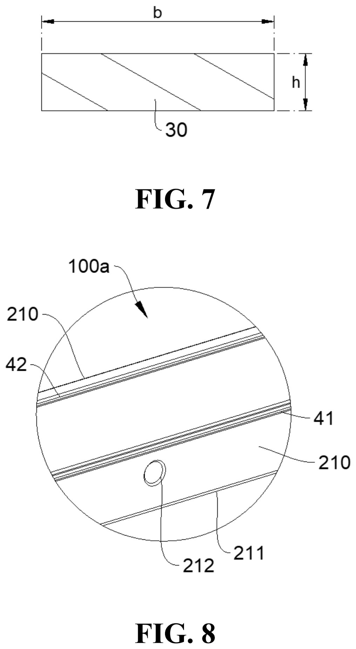

According to some embodiments of the present application, referring to FIG. 7, FIG. 7 is a schematic view of a first sealing member 30 in some embodiments of the present application.

The width of the first sealing member 30 in a natural state is b. Along an interval direction of the first position-limiting protrusion 41 and the second position-limiting protrusion 42, the minimum distance between the first position-limiting protrusion 41 and the second position-limiting protrusion 42 is B, satisfying b+2 mm≤B≤b+20 mm.

"The width of the first sealing member 30 in a natural state is b" may mean that the width size of the first sealing member 30 is b when the first sealing member 30 is not subjected to an external force. The width direction of the first sealing member 30 may be perpendicular to the thickness direction of the first sealing member 30, or may be perpendicular to the length direction of the first sealing member 30. The width direction of the first sealing member 30 may be an interval direction of the first position-limiting protrusion 41 and the second position-limiting protrusion 42, a direction in which the first position-limiting protrusion 41 points to the second position-limiting protrusion 42, or a direction in which the second position-limiting protrusion 42 points to the first position-limiting protrusion 41.

In some embodiments, the minimum distance B between the first position-limiting protrusion 41 and the second position-limiting protrusion 42 may be any value among b+2 mm, b+3 mm, b+4 mm, b+5 mm, b+6 mm, ..., b+18 mm, b+19 mm or b+20 mm, or any value between two adjacent values.

During assembly of the box body 100, the first box body 10 and the second box body 20 are connected to each other, and the first sealing member 30 between the first sealing surface 11 and the second sealing surface 21 will be compressed, that is, in a natural state, the first sealing member 30 is deformed and compressed by the action force of the first box body 10 and the second box body 20, thereby increasing the width of the first sealing member 30. In the above solution, by defining the numerical relationship between the minimum distance B between the first position-limiting protrusion 41 and the second position-limiting protrusion 42 and the width b of the first sealing member 30 in a natural state, the risk of reduction of the sealing effect caused by the damage to the first sealing member 30 due to interference between the first sealing member 30 after compression and the position-limiting portion 40 can be effectively reduced, thereby making the box body 100 more reliable and making the battery 2000 more reliable.

According to some embodiments of the present application, the thickness of the first sealing member 30 in a natural state is h. The height of the position-limiting portion 40 protruding from the second sealing surface 21 is H1, satisfying 0.3 h≤H1≤0.7 h.

"The thickness of the first sealing member 30 in a natural state is h" may mean that the thickness size of the first sealing member 30 is h when the first sealing member 30 is not subjected to an external force. The thickness direction of the first sealing member 30 may be perpendicular to the width direction of the first sealing member 30, or may be perpendicular to the length direction of the first sealing member 30. The thickness direction of the first sealing member 30 may be perpendicular to a plane where the second sealing surface 21 is located, or the thickness direction of the first sealing member 30 may be a direction pointing from the second sealing surface 21 to the first sealing surface 11.

"The height of the position-limiting portion 40 protruding from the second sealing surface 21 is H1" may mean that the size of the position-limiting portion 40 in the thickness direction of the sealing member is H1.

In some embodiments, the height H1 of the position-limiting portion 40 protruding from the second sealing surface 21 may be any value among 0.3 h, 0.4 h, 0.5 h, 0.6 h or 0.7 h, or any value between two adjacent values.

During assembly of the box body 100, the first box body 10 and the second box body 20 are connected to each other, and the first sealing member 30 between the first sealing surface 11 and the second sealing surface 21 will be compressed, that is, in a natural state, the first sealing member 30 is deformed and compressed by the action force of the first box body 10 and the second box body 20, thereby reducing the height of the first sealing member 30. In the above solution, by defining the numerical relationship between the height H1 of the position-limiting portion 40 protruding from the second sealing surface 21 and the thickness h of the first sealing member 30 in a natural state, the risk of reduction of the sealing effect caused by the damage to the first sealing surface 11 due to interference between the position-limiting portion 40 and the first sealing surface 11 because of reduction of the height of the first sealing member 30 after compression can be effectively reduced, thereby making the box body 100 more reliable and making the battery 2000 more reliable.

According to some embodiments of the present application, referring to FIG. 5, the box body 100 further includes a connecting element 50, and the first sealing surface 11 and the second sealing surface 21 are connected through the connecting element 50.

The connecting element 50 may be a component that connects the first sealing surface 11 and the second sealing surface 21. In some embodiments, the connecting element 50 may be a bolt, screw or rivet. In some other embodiments, the connecting element 50 may be a bonding component arranged between the first sealing surface 11 and the second sealing surface 21, such as a bonding agent arranged between the first sealing surface 11 and the second sealing surface 21.

In the above solution, by providing the connecting element 50 to connect the first sealing surface 11 and the second sealing surface 21, the sealing effect of the first sealing surface 11 and the second sealing surface 21 can be effectively improved, and the stability of connection between the first sealing surface 11 and the second sealing surface 21 can be improved, thereby improving the structural stability of the box body 100 and making the battery 2000 more reliable.

According to some embodiments of the present application, the projection of the connecting element 50 does not coincide with the projection of the first sealing member 30 along a direction perpendicular to the second sealing surface 21.

"The direction perpendicular to the second sealing surface 21" can be understood as a thickness direction of the first sealing member 30, or a direction pointing from the first sealing surface 11 to the second sealing surface 21.

"The projection of the connecting element 50 does not coincide with the projection of the first sealing member 30" may mean that the connecting element 50 and the first sealing member 30 are staggered from each other on the second sealing surface 21 and do not interfere with each other. For example, on the second sealing surface 21, the connecting element 50 is located on one side of the first sealing member 30.

In the above solution, the first sealing member 30 and the connecting element 50 are staggered on a second sealing member 31 and do not interfere with each other, which can reduce the interference of the connecting element 50 on the first sealing member 30, so that the first sealing member 30 can achieve an effective sealing effect between the first sealing surface 11 and the second sealing surface 21 to reduce the risk that the first sealing member 30 is damaged due to the connecting element 50 passing through the first sealing member 30 and thus a seal cannot be provided.

According to some embodiments of the present application, the first box body 10 and the second box body 20 together enclose to form a closed space 100a for accommodating battery cells 2001. The second sealing surface 21 has a first edge 210 close to the closed space 100a and a second edge 211 away from the closed space 100a, and the first sealing member 30 is closer to the first edge 210 than the connecting element 50.

According to some embodiments of the present application, referring to FIG. 5 and FIG. 8, FIG. 8 is an enlarged view of a part A in FIG. 4. The first box body 10 and the second box body 20 together enclose to form a closed space 100a for accommodating battery cells 2001. The second sealing surface 21 has a first edge 210 close to the closed space 100a and a second edge 211 away from the closed space 100a, and the first sealing member 30 is closer to the first edge 210 than the connecting element 50.

The closed space 100a may be a space enclosed together by the first box body 10 and the second box body 20. The battery cells 2001 of the battery 2000 are accommodated in the closed space 100a.

The "first edge 210" refers to an edge of the second sealing surface 21 close to the closed space 100a, which may be regarded as an "inner edge" of the second sealing surface 21. The "second edge 211" refers to an edge of the second sealing surface 21 away from the closed space 100a, which may be regarded as an "outer edge" of the second sealing surface 21. "The first sealing member 30 is closer to the first edge 210 than the connecting element 50" may mean that the first sealing member 30 is closer to the closed space 100a than the connecting element 50, that is, the first sealing member 30 is located inside the second sealing surface 21 compared to the connecting element 50. In some embodiments, when an external liquid infiltrates into the closed space 100a from the outside of the box body 100, the liquid first passes through the part where the connecting element 50 is located and then passes through the part where the first sealing member 30 is located.

In the above solution, the first edge 210 of the second sealing surface 21 may be closer to the closed space 100a than the second edge 211, that is, the side of the second sealing surface 21 facing away from the second edge 211 may be regarded as an inner side, and the side of the second sealing surface 21 facing away from the first edge 210 may be regarded as an outer side. Therefore, the first sealing member 30 is closer to the first edge 210 than the connecting element 50, which may mean that the first sealing member 30 is located on the inner side compared to the connecting element 50. By arranging the first sealing member 30 on the inner side compared to the connecting element 50, the first sealing member 30 can still achieve a certain sealing effect after the connecting element 50 is damaged and the connection fails, thereby making the box body 100 more reliable and making the battery 2000 more reliable.

According to some embodiments of the present application, reference is made to FIG. 5, FIG. 6 and FIG. 8. A through hole 110 is formed in the first sealing surface 11, a threaded hole 212 is formed in the second sealing surface 21, and the connecting element 50 passes through the through hole 110 and is in threaded fit with the threaded hole 212.

"A through hole 110 is formed in the first sealing surface 11" may mean that a through hole 110 is formed in the part where the first sealing surface 11 is located in the first box body 10, and the through hole 110 penetrates through the part for the connecting element 50 to pass through. "A threaded hole 212 is formed in the second sealing surface 21" may mean that a threaded hole 212 is formed in the part where the second sealing surface 21 is located in the second box body 20, and the opening of the threaded hole 212 is located on the second sealing surface 21.

In some embodiments, the connecting element 50 may be a threaded fastener, that is, at least a portion of the peripheral surface of the connecting element 50 is formed with external threads to be in threaded fit with the threaded hole 212.

In the above solution, by forming the through hole 110 in the first sealing surface 11 and forming the threaded hole 212 in the second sealing surface 21, the connecting element 50 can effectively connect the first sealing surface 11 and the second sealing surface 21 by means of threaded connection to improve the sealing effect of the first sealing surface 11 and the second sealing surface 21 and the stability of connection between the first sealing surface 11 and the second sealing surface 21, thereby making the box body 100 more reliable and making the battery 2000 more reliable.

According to some embodiments of the present application, the connecting element 50 includes a body 51 and a first position-limiting body 52, one end of the body 51 is connected to the first position-limiting body 52, the other end of the body 51 is in threaded fit with the threaded hole 212, the cross-sectional area of the first position-limiting body 52 is larger than the cross-sectional area of the body 51, and the first position-limiting body 52 is in contact with a surface of the first box body 10 facing away from the second sealing surface 21.

In some embodiments, the body 51 may be a main part of the connecting element 50. At least a portion of the peripheral surface of the body may be formed with external threads to be in threaded fit with the threaded hole 212. The first position-limiting body 52 may have a structure connected to one end of the body 51 and configured to abut against the part where the first sealing surface 11 of the first box body 10 is located. In some embodiments, the body 51 may be rod-shaped, and the first position-limiting body 52 is arranged at one end of the body 51. In some embodiments, an axial direction of the body 51 may be parallel to a direction pointing from the first sealing surface 11 to the second sealing surface 21.

The cross-sectional area of the first position-limiting body 52 may be understood as the area of the projection of the first position-limiting body 52 on the surface perpendicular to the axial direction of the body 51, or the cross-sectional area of the first position-limiting body 52 on the surface perpendicular to the axial direction of the body 51. The cross-sectional area of the body 51 may be understood as the area of the projection of the body 51 on the surface perpendicular to the axial direction of the body 51, or the cross-sectional area of the body 51 on the surface perpendicular to the axial direction of the body 51.

In the above solution, the connecting element 50 includes a body 51 and a first position-limiting body 52. By setting the cross-sectional area of the first position-limiting body 52 to be larger than the cross-sectional area of the body 51, the surface of the first box body 10 facing away from the second sealing surface 21 can be effectively constrained, thereby improving the stability of connection between the first sealing surface 11 and the second sealing surface 21 and improving the structural stability of the box body 100.

According to some embodiments of the present application, the connecting element 50 further includes a second position-limiting body 53, the second position-limiting body 53 is arranged between the first position-limiting body 52 and the body 51, the cross-sectional area of the first position-limiting body 52 is larger than the cross-sectional area of the second position-limiting body 53, the cross-sectional area of the second position-limiting body 53 is larger than the cross-sectional area of the body 51, and a portion of the second position-limiting body 53 is located in the through hole 110 and is in contact with the second sealing surface 21.

The second position-limiting body 53 is located between the first position-limiting body 52 and the body 51. On a surface perpendicular to the axial direction of the body 51, the area of the projection of the second position-limiting body 53 is smaller than the area of the projection of the first position-limiting body 52, and the area of the projection of the second position-limiting body 53 is larger than the area of the projection of the body 51.

In some embodiments, during assembly of the connecting element 50, the second position-limiting body 53 can pass through the through hole 110 of the first sealing surface 11. After the connecting element 50 is assembled, a portion of the second position-limiting body 53 may be located in the through hole 110 and is in contact with the second sealing surface 21.

In the above solution, by arranging the second position-limiting body 53 between the first position-limiting body 52 and the body 51, setting the cross-sectional area of the second position-limiting body 53 to be smaller than the cross-sectional area of the first position-limiting body 52 and setting the cross-sectional area of the second position-limiting body 53 to be larger than the cross-sectional area of the body 51, an end surface of the second position-limiting body 53 facing away from the first position-limiting body 52 can be in contact with the second sealing surface 21 to limit the depth of the body 51 locked into the threaded hole 212, thereby limiting the compression degree of the first sealing member 30. On the one hand, this can reduce the problem of the first sealing member 30 being damaged due to an excessive force caused by an excessive locking depth, resulting in sealing failure. On the other hand, this can reduce the risk that the first sealing member 30 does not play a sealing role or the sealing effect is poor due to an insufficient locking depth.

In some embodiments, a plurality of connecting elements 50 may be arranged along an extension direction of the second sealing surface 21, and the plurality of connecting elements 50 are spaced apart from each other.

According to some embodiments of the present application, reference is made to FIG. 4 and FIG. 5. The first box body 10 includes a first side wall 12, the through hole 110 is formed in the first side wall 12, and the first position-limiting body 52 is in contact with a surface of the first side wall 12 facing away from the second sealing surface 21. The thickness of the first sealing member 30 in a natural state is h, the thickness of the first side wall 12 is d, and the length of the second position-limiting body 53 is H2, satisfying 0.3 h+d≤H2≤0.7 h+d.

The first side wall 12 is a portion of the structure of the first box body 10. The first sealing surface 11 is arranged on the first side wall 12. "The first position-limiting body 52 is in contact with a surface of the first side wall 12 facing away from the second sealing surface 21" may mean that the first position-limiting body 52 of the connecting element 50 is in contact with the first side wall 12 to constrain the first side wall 12, so that the first side wall 12 can be effectively connected to the second sealing surface 21 of the second box body 20.

"The thickness of the first sealing member 30 in a natural state is h" may mean that the thickness size of the first sealing member 30 is h when the first sealing member 30 is not subjected to an external force. The thickness direction of the first sealing member 30 may be perpendicular to the width direction of the first sealing member 30, or may be perpendicular to the length direction of the first sealing member 30. The thickness direction of the first sealing member 30 may be perpendicular to a plane where the second sealing surface 21 is located, or the thickness direction of the first sealing member 30 may be a direction pointing from the second sealing surface 21 to the first sealing surface 11.

"The thickness of the first side wall 12 is d" may mean that the size of the first side wall 12 is d in the thickness direction of the first sealing member 30. "The length of the second position-limiting body 53 is H2" may mean that the size of the second position-limiting body 53 is d in the thickness direction of the first sealing member 30.

In some embodiments, the length H2 of the second position-limiting body 53 may be any value among 0.3 h+d, 0.4 h+d, 0.5 h+d, 0.6 h+d or 0.7 h+d, or any value between two adjacent values.

During assembly of the box body 100, the first box body 10 and the second box body 20 are connected to each other, and the first sealing member 30 between the first sealing surface 11 and the second sealing surface 21 will be compressed, that is, in a natural state, the first sealing member 30 is deformed and compressed by the action force of the first box body 10 and the second box body 20, thereby reducing the height of the first sealing member 30. In the above solution, by defining the numerical relationship among the thickness d of the first side wall 12, the length H2 of the second position-limiting body 53, and the thickness h of the first sealing member 30 in a natural state, the compression ratio of the first sealing member 30 in the thickness direction thereof can be effectively controlled. On the one hand, this can reduce the problem of the first sealing member 30 being damaged due to an excessive force caused by an excessive locking depth, resulting in sealing failure. On the other hand, this can reduce the risk that the first sealing member 30 does not play a sealing role or the sealing effect is poor caused by an unsuitable compression ratio in the thickness direction due to an insufficient locking depth. Furthermore, by controlling the compression ratio of the first sealing member 30 in the thickness direction thereof, the risk of damage to the first side wall 12 due to an excessive locking reaction force on the first side wall 12 can be reduced, thereby making the box body 100 more reliable and making the battery 2000 more reliable.

According to some embodiments of the present application, the first sealing surface 11 and the second sealing surface 21 intersect with the horizontal plane.

In some embodiments, in a normal use state of the battery 2000, the first sealing surface 11 and the second sealing surface 21 both intersect at the horizontal plane. The horizontal plane may be a surface perpendicular to a vertical direction.

In the above solution, the horizontal plane is a plane perpendicular to a vertical direction (in some embodiments, the vertical direction may also be parallel to a direction of gravity), and the first sealing surface 11 and the second sealing surface 21 are defined to intersect with the horizontal plane. That is, when the first sealing member 30 is arranged on the second sealing surface 21, there is a risk that the first sealing member 30 will slide relative to the second sealing surface 21 due to the influence of gravity. Therefore, by the position-limiting portion 40 protruding from the second sealing surface 21, the displacement of the first sealing member 30 due to the influence of gravity can be effectively limited to reduce the risk of sealing failure of the first sealing surface 11 and the second sealing surface 21 due to misalignment of the first sealing member 30 during assembly of the box body 100, thereby making the box body 100 more reliable and further improving the reliability of the battery 2000.

According to some embodiments of the present application, the first sealing surface 11 and the second sealing surface 21 are arranged perpendicular to the horizontal plane.

"The first sealing surface 11 and the second sealing surface 21 are arranged perpendicular to the horizontal plane" may mean that in a normal use state of the battery 2000, the first sealing surface 11 and the second sealing surface 21 are both perpendicular to the horizontal plane, for example, the first sealing surface 11 and the second sealing surface 21 are both parallel to the vertical direction. In some embodiments, the first sealing surface 11 and the second sealing surface 21 may be referred to as "vertical surface".

In the above solution, by limiting the first sealing surface 11 and the second sealing surface 21 to be perpendicular to the horizontal plane, on the one hand, the space in a horizontal direction occupied by the interconnection between the first box body 10 and the second box body 20 can be saved, and the space occupation ratio of the box body 100 can be reduced. On the other hand, by the position-limiting portion 40 protruding from the second sealing surface 21, the gravity of the first sealing member 30 can be effectively overcome to locate the first sealing member 30 in a correct position to reduce the risk of sealing failure of the first sealing surface 11 and the second sealing surface 21 due to misalignment of the first sealing member 30 during assembly of the box body 100, thereby making the box body 100 more reliable and further improving the reliability of the battery 2000.

According to some embodiments of the present application, reference is made to FIG. 4. The first box body 10 includes a first end wall 13 and a first side wall 12. The second box body 20 includes a second end wall 22, the second end wall 22 is arranged opposite to the first end wall 13 along a first direction z, the second box body 20 has the second sealing surface 21 in a second direction x, the first direction z intersects with the second direction x, and the second direction x is parallel to the horizontal plane. One end of the first side wall 12 is connected to the first end wall 13, and the other end of the first side wall 12 has the first sealing surface 11.

The first end wall 13 is a portion of the structure of the first box body 10. The first side wall 12 has a structure connected to the first box body 10, and the first sealing surface 11 is arranged on the first side wall 12. In some embodiments, the first side wall 12 may be connected to the first end wall 13 by means of bonding, welding or bolted connection. In some embodiments, the first side wall 12 and the first end wall 13 may also be integrally formed.

The second end wall 22 is a portion of the structure of the second box body 20. The first end wall 13 and the second end wall 22 are arranged oppositely in the first direction z, and the first direction z intersects with the horizontal plane. In some embodiments, the first end wall 13 may be a top wall of the box body 100, and the second end wall 22 may be a bottom wall of the box body 100. In some embodiments, the first direction z may be a vertical direction, the first direction z may be parallel to the direction of gravity, or the first direction z may be a height direction of the box body 100.

The second box body 20 has the second sealing surface 21 in the second direction x. For example, the second end wall 22 has the second sealing surface 21 in the second direction x; or other structures of the second box body 20 have the second sealing surface 21 in the second direction x. In some embodiments, the second direction x may be the width direction of the box body 100.

In the above solution, by connecting the first sealing surface 11 at one end of the first side wall 12 of the first box body 10 with the second sealing surface 21 of the second box body 20, the connection between the first box body 10 and the second box body 20 is achieved, so as to achieve the connection between the first box body 10 and the second box body 20 without providing a flange structure protruding along the second direction x, thereby improving the space utilization ratio of the battery 2000 in the second direction x to accommodate more battery cells 2001 or reduce the volume of the battery 2000, and further improving the volumetric energy density of the battery 2000.

According to some embodiments of the present application, reference is made to FIG. 4 and FIG. 8. The position-limiting portion 40 includes a first position-limiting protrusion 41. The first sealing member 30 is closer to the first end wall 13 than the first position-limiting protrusion 41 along a first direction z.

The first position-limiting protrusion 41 is arranged on the second sealing surface 21, and protrudes from the second sealing surface 21 along a direction pointing from the second sealing surface 21 to the first sealing surface 11. "The first sealing member 30 is closer to the first end wall 13 than the first position-limiting protrusion 41 along a first direction z" may mean that the first sealing member 30 is located above the first position-limiting protrusion 41 in the direction of gravity, and the first position-limiting protrusion 41 is able to overcome the gravity of the first sealing member 30.

In the above solution, the position-limiting portion 40 may include the first position-limiting protrusion 41. By arranging the first position-limiting protrusion 41 to be farther away from the first end than the first sealing member 30, the gravity of the first sealing member 30 can be effectively overcome to limit the displacement of the first sealing member 30, so as to reduce the risk of sealing failure of the first sealing surface 11 and the second sealing surface 21 due to misalignment of the first sealing member 30 during assembly of the box body 100, thereby making the box body 100 more reliable and further improving the reliability of the battery 2000.

According to some embodiments of the present application, reference is made to FIG. 4 and FIG. 8. The first position-limiting protrusion 41 extends from one end of the second sealing surface 21 to the other end along a third direction y, and the third direction y, the first direction z and the second direction x are perpendicular to each other.

In some embodiments, the third direction y may be the length direction of the box body 100, the first direction z may be the height direction of the box body 100, and the second direction x may be the width direction of the box body 100.

In some embodiments, the first position-limiting protrusion 41 may be in the shape of a strip extending along the third direction y.

"The first position-limiting protrusion 41 extends from one end of the second sealing surface 21 to the other end" may mean that the first position-limiting protrusion 41 is able to support or limit the first sealing member 30 at any part in the third direction y.

In the above solution, by configuring the first position-limiting protrusion 41 to extend along a third direction y and extend from one end of the second sealing surface 21 to the other end, the displacement of the first sealing member 30 at any part in the third direction y can be effectively limited to reduce the risk of sealing failure of the first sealing surface 11 and the second sealing surface 21 due to misalignment of the first sealing member 30 during assembly of the box body 100, thereby making the box body 100 more reliable and further improving the reliability of the battery 2000.

According to some embodiments of the present application, reference is made to FIG. 4 and FIG. 8. The position-limiting portion 40 further includes a second position-limiting protrusion 42, the first position-limiting protrusion 41 and the second position-limiting protrusion 42 are oppositely arranged at an interval along a first direction z, and the first sealing member 30 is arranged between the first position-limiting protrusion 41 and the second position-limiting protrusion 42.

The second position-limiting protrusion 42 is arranged on the second sealing surface 21, and protrudes from the second sealing surface 21 along a direction pointing from the second sealing surface 21 to the first sealing surface 11. The first position-limiting protrusion 41 and the second position-limiting protrusion 42 are arranged at an interval in the first direction z, and a gap between the first position-limiting protrusion 41 and the second position-limiting protrusion 42 may accommodate the first sealing member 30.

In the above solution, by providing the second position-limiting protrusion 42 and arranging the second position-limiting protrusion 42 and the first position-limiting protrusion 41 oppositely at an interval along a first direction z, the displacement of the first sealing member 30 in the first direction z can be effectively limited to reduce the risk of sealing failure of the first sealing surface 11 and the second sealing surface 21 due to misalignment of the first sealing member 30 during assembly of the box body 100, thereby making the box body 100 more reliable and further improving the reliability of the battery 2000.

According to some embodiments of the present application, the second position-limiting protrusion 42 extends from one end of the second sealing surface 21 to the other end along a third direction y, and the third direction y, the first direction z and the second direction x are perpendicular to each other.

In some embodiments, the third direction y may be the length direction of the box body 100, the first direction z may be the height direction of the box body 100, and the second direction x may be the width direction of the box body 100.

In some embodiments, the first position-limiting protrusion 41 may be in the shape of a strip extending along the third direction y.

"The second position-limiting protrusion 42 extends from one end of the second sealing surface 21 to the other end" may mean that the second position-limiting protrusion 42 is able to limit the first sealing member 30 at any part in the third direction y.

In the above solution, by configuring the second position-limiting protrusion 42 to extend along a third direction y and extend from one end of the second sealing surface 21 to the other end, the displacement of the first sealing member 30 at any part in the third direction y can be effectively limited to reduce the risk of sealing failure of the first sealing surface 11 and the second sealing surface 21 due to misalignment of the first sealing member 30 during assembly of the box body 100, thereby making the box body 100 more reliable and further improving the reliability of the battery 2000.

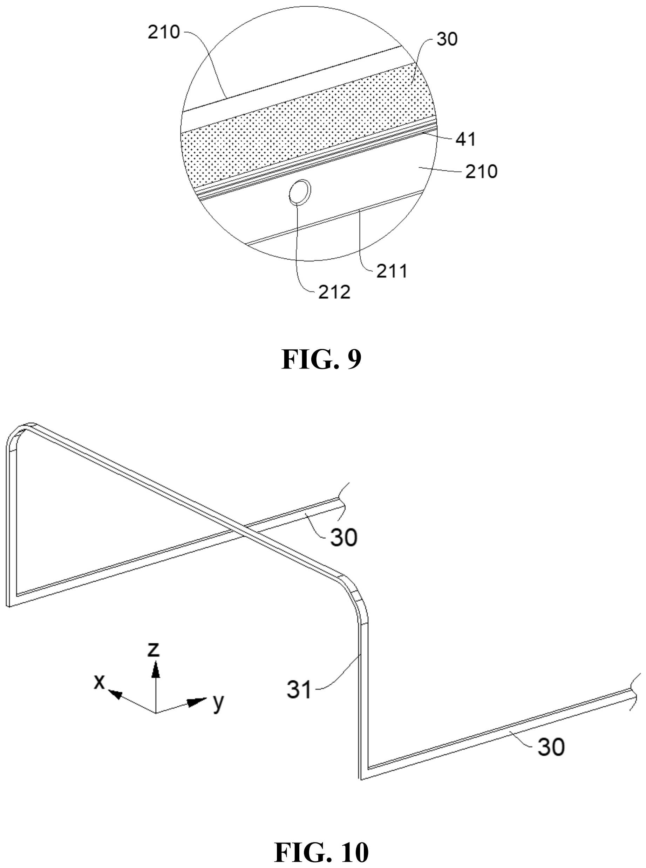

In some other embodiments of the present application, the second position-limiting portion 40 may be cancelled. For example, referring to FIG. 9, FIG. 9 is a schematic view of a first position-limiting portion 40, a second sealing surface 21 and a first sealing member 30 in some embodiments of the present application. In this figure, the second sealing surface 21 is provided with a first position-limiting portion 40 but not a second position-limiting portion 40. The first sealing member 30 can be stably arranged on the second sealing surface 21 under the action of the first position-limiting portion 40.

According to some embodiments of the present application, referring to FIG. 4, there are two first side walls 12, and the two first side walls 12 are arranged oppositely along the second direction x. The second end wall 22 is located between the two first side walls 12, the second box body 20 has two second sealing surfaces 21 arranged oppositely along the second direction x, and the second sealing surfaces 21 are in one-to-one correspondence to the first side walls 12.

Referring to FIG. 4, in the second direction x, the first box body 10 has two first side walls 12 arranged oppositely at an interval, and one end of the first side wall 12 is connected to the first end wall 13 and extends along the first direction z. Correspondingly, the second box body 20 has two second sealing surfaces 21 to be connected to the first sealing surfaces 11 on the first side walls 12 respectively.

In some embodiments, correspondingly, a first sealing member 30 is arranged between each pair of first sealing surface 11 and second sealing surface 21.

In the above solution, two sides of the box body 100 are respectively provided with the first sealing surface 11 and the second sealing surface 21 along the second direction x, that is, two sides of the first box body 10 and the second box body 20 in the second direction x are respectively connected through the corresponding first sealing surface 11 and second sealing surface 21, so as to achieve the connection between the first box body 10 and the second box body 20 without providing flange structures protruding along the second direction x on both sides of the box body 100, thereby improving the space utilization ratio of the battery 2000 in the second direction x to accommodate more battery cells 2001 or reduce the volume of the battery 2000, and further improving the volumetric energy density of the battery 2000.

According to some embodiments of the present application, reference is made to FIG. 4. Openings are respectively formed at two ends of the first box body 10 along a third direction y, and the first direction z, the second direction x and the third direction y are perpendicular to each other. The second box body 20 further includes two second side walls 23, the two second side walls 23 are oppositely arranged at an interval in the third direction y and are connected to the second end wall 22, and the two second side walls 23 respectively seal the two openings.

In some embodiments, the first direction z may be the height direction of the box body 100, the second direction x may be the width direction of the box body 100, and the third direction y may be the length direction of the box body 100.

In some embodiments, the second side wall 23 may be connected to the second end wall 22 by means of bonding, welding or bolted connection. In some embodiments, the second side wall 23 and the second end wall 22 may also be integrally formed. In some embodiments, components such as explosion-proof valves, water-cooling connectors, or high and low voltage connectors for the battery 2000 can be mounted on the second side wall 23 to ensure normal charging and discharging operations of the battery 2000.

The openings respectively formed at both ends of the first box body 10 along the third direction y may be notches corresponding to the second side walls 23, and the second side walls 23 can correspondingly seal the openings to prevent the battery 2000 from having additional mutual interference or overlapping parts, thereby improving the utilization ratio of the manufacturing material of the battery 2000, and making the battery 2000 have a lower manufacturing cost. At the same time, the battery 2000 is prevented from having additional mutual interference or overlapping parts, thereby avoiding the occurrence of wasted space. In some embodiments, the cross section of the first box body 10 may be U-shaped.

In the above solution, by providing the second side wall 23, on the one hand, components such as explosion-proof valves, water-cooling connectors, or high and low voltage connectors can be mounted on the second side wall 23 to ensure normal charging and discharging operations of the battery 2000; and on the other hand, compared to the flange structure protruding along the third direction y between the first box body 10 and the second box body 20, by providing a third side wall to seal the opening, the space utilization ratio of the battery 2000 in the third direction y can be improved, and the volumetric energy density of the battery 2000 can be improved.

According to some embodiments of the present application, reference is made to FIG. 4. The box body 100 further includes a second sealing member 31. The second side wall 23 has a third sealing surface 230, the first box body 10 has a fourth sealing surface 14, and the second sealing member 31 is arranged between the third sealing surface 230 and the fourth sealing surface 14, so that the third sealing surface 230 is in sealed connection with the fourth sealing surface 14.

The third sealing surface 230 is a surface for forming a sealed connection with the fourth sealing surface 14 of the first box body 10. In some embodiments, the third sealing surface 230 may be an outer peripheral surface of the second side wall 23, and the end of the third sealing surface 230 may be connected to the second sealing surface 21.

The fourth sealing surface 14 is a surface for forming a sealed connection with the third sealing surface 230 of the second box body 20. In some embodiments, a portion of the fourth sealing surface 14 is formed on the first end wall 13 and the other portion is formed on the first side wall 12. In some embodiments, the end of the fourth sealing surface 14 may be connected to the first sealing surface 11.

The second sealing member 31 is a component arranged between the third sealing member and the fourth sealing member. The second sealing member 31 is subjected to a force to elastically or plastically deform to fill the uneven parts on the third sealing surface 230 and the fourth sealing surface 14, so as to achieve a sealed connection between the third sealing surface 230 and the fourth sealing surface 14. In some embodiments, the material of the second sealing member 31 may be a material such as plastic or rubber that is capable of generating plastic or elastic deformation. In some embodiments, the second sealing member 31 may be sheet-shaped. For example, the second sealing member 31 may be a second sealing gasket.

In some embodiments, the second sealing member 31 is arranged between the third sealing surface 230 and the fourth sealing surface 14, the third sealing surface 230 and the fourth sealing surface 14 may be connected to each other by means of bonding, welding or bolted connection, and the second sealing member 31 generates plastic or elastic deformation to achieve a sealed connection between the third sealing surface 230 and the fourth sealing surface 14.

In some embodiments, when the third sealing surface 230 and the fourth sealing surface 14 are connected to each other by means of bolted connection, bolts may be located on one side of the second sealing member 31, that is, the bolts and the second sealing member 31 do not interfere with each other.

In the above solution, by arranging the second sealing member 31 between the third sealing surface 230 and the fourth sealing surface 14, the sealing performance between the second side wall 23 and the first box body 10 can be improved, thereby improving the sealing performance of the box body 100 and making the battery 2000 more reliable.

According to some embodiments of the present application, referring to FIG. 10, FIG. 10 is a schematic view of a first sealing member 30 and a second sealing member 31 in some embodiments of the present application. Two ends of the first sealing member 30 are respectively connected to two second sealing members 31.

In some embodiments, the first sealing member 30 and the second sealing member 31 may have independent structures, and the first sealing member 30 and the second sealing member 31 can be connected by means of bonding or by an intermediate connecting element 50. In some other embodiments, the first sealing member 30 and the second sealing member 31 may be of an integrated structure.

In the above solution, the first sealing member 30 and the second sealing member 31 may be integrally formed or may be connected separately. By providing the first sealing member 30 and the second sealing member 31, good sealing performance can be achieved between the first box body 10 and the second box body 20, thereby improving the reliability of the battery 2000.

According to some embodiments of the present application, a battery 2000 is further provided. The battery 2000 includes battery cells 2001 and a box body 100 described above. The battery cells 2001 are accommodated in the box body 100.

In the above solution, because the second sealing surface 21 in the box body 100 is provided with the position-limiting portion 40 to limit the position of the first sealing member 30, the box body 100 has good sealing performance, which can effectively protect the battery cells 2001 in the box body 100 and make the battery 2000 more reliable.

According to some embodiments of the present application, an electrical apparatus is further provided. The electrical apparatus includes a battery 2000 in the second direction x. The battery 2000 is configured to provide electric energy.

According to some embodiments of the present application, reference is made to FIG. 3 to FIG. 10. The box body 100 includes a first box body 10, a second box body 20 and a first sealing member 30. The first box body 10 includes a first end wall 13 and a first side wall 12. The second box body 20 includes a second end wall 22 and a first side wall 12. The second end wall 22 and the first end wall 13 are arranged oppositely along the first direction z, and the second box body 20 has a second sealing surface 21 in the second direction x. The first direction z intersects with the second direction x, and the second direction x is parallel to the horizontal plane. One end of the first side wall 12 is connected to the first end wall 13, and the other end of the first side wall 12 has a first sealing surface 11. The first sealing member 30 is arranged between the first sealing surface 11 and the second sealing surface 21 so that the first sealing surface 11 is in sealed connection with the second sealing surface 21.

The second sealing surface 21 is provided with a position-limiting portion 40. The position-limiting portion 40 includes a first position-limiting protrusion 41 and a second position-limiting protrusion 42. The first position-limiting protrusion 41 and the second position-limiting protrusion 42 are arranged at an interval in the first direction z. The first sealing member 30 is arranged between the first position-limiting protrusion 41 and the second position-limiting protrusion 42.

The position-limiting portion 40 is configured to limit the displacement of the first sealing member 30 to reduce the risk of sealing failure of the first sealing surface 11 and the second sealing surface 21 due to misalignment of the first sealing member 30 during assembly of the box body 100, thereby making the box body 100 more reliable and further improving the reliability of the battery 2000.

In the first direction z, the minimum distance between the first position-limiting protrusion 41 and the second position-limiting protrusion 42 is B, and the width of the first sealing member 30 in a natural state is b. B satisfies: b+2 mm≤B≤b+20 mm.

In the second direction x, the height of the position-limiting portion 40 protruding from the second sealing surface 21 is H1 (that is, the maximum size of the first position-limiting portion 40 or the second position-limiting portion 40 protruding from the second sealing surface 21 is H1). The thickness of the first sealing member 30 in a natural state is h, and H1 satisfies: 0.3 h≤H1≤0.7 h.

The box body 100 further includes a connecting element 50, and the connecting element 50 is configured to connect the first sealing surface 11 and the second sealing surface 21. The connecting element 50 is located outside the first sealing member 30, that is, the connecting element 50 is farther away from the inside of the box body 100 than the first sealing member 30.

The connecting element 50 includes a body 51, a first position-limiting portion 40 and a second position-limiting portion 40. The connecting element 50 may be a position-limiting bolt. The first position-limiting portion 40, the second position-limiting portion 40 and the body 51 are connected in sequence. The cross-sectional area of the first position-limiting body 52 is larger than the cross-sectional area of the second position-limiting body 53, and the cross-sectional area of the second position-limiting body 53 is larger than the cross-sectional area of the body 51. The first position-limiting body 52 is in contact with a surface of the first side wall 12 facing away from the second sealing surface 21. A portion of the second position-limiting body 53 is located in the through hole 110 and is in contact with the second sealing surface 21. The body 51 is in threaded connection with the threaded hole 212 on the second sealing surface 21.

Referring to FIG. 4, there are two first side walls 12, and the two first side walls 12 are arranged oppositely along the second direction x. Openings are respectively formed at two ends of the first box body 10 along the third direction y. The first direction z, the second direction x and the third direction y are perpendicular to each other. The second box body 20 further includes two second side walls 23, the two second side walls 23 are oppositely arranged at an interval in the third direction y and are connected to the second end wall 22, and the two second side walls 23 respectively seal the two openings. The second sealing member 31 is arranged between the second side wall 23 and the first box body 10, so that the second side wall 23 is in sealed connection with the first box body 10 when the opening is sealed.

The above descriptions are merely preferred embodiments of the present application, but are not intended to limit the present application. For those skilled in the art, the present application may have various modifications and changes. Any modification, equivalent replacement, improvement, and the like made within the spirit and principle of the present application shall fall within the scope of protection of the present application.

## Claims

1. A box body applied to a battery, comprising:
a first box body having a first sealing surface;
a second box body having a second sealing surface;
a first sealing member arranged between the first sealing surface and the second sealing surface so that the first sealing surface is in sealed connection with the second sealing surface; and
a position-limiting portion protruding from the second sealing surface and configured to limit the movement of the first sealing member.

2. The box body according to claim 1, wherein
the position-limiting portion comprises a first position-limiting protrusion and a second position-limiting protrusion arranged at an interval, and the first sealing member is arranged between the first position-limiting protrusion and the second position-limiting protrusion.

3. The box body according to claim 2, wherein
the width of the first sealing member in a natural state is b; and along an interval direction of the first position-limiting protrusion and the second position-limiting protrusion, the minimum distance between the first position-limiting protrusion and the second position-limiting protrusion is B, satisfying b+2 mm≤B≤b+20 mm.

4. The box body according to any one of claims 1 to 3, wherein
the thickness of the first sealing member in a natural state is h; and the height of the position-limiting portion protruding from the second sealing surface is H1, satisfying 0.3 h≤H1≤0.7 h.

5. The box body according to any one of claims 1 to 4, wherein
the box body further comprises a connecting element, and the first sealing surface and the second sealing surface are connected through the connecting element.

6. The box body according to claim 5, wherein
the projection of the connecting element does not coincide with the projection of the first sealing member along a direction perpendicular to the second sealing surface.

7. The box body according to claim 5 or 6, wherein
the first box body and the second box body together enclose to form a closed space for accommodating battery cells; and
the second sealing surface has a first edge close to the closed space and a second edge away from the closed space, and the first sealing member is closer to the first edge than the connecting element.

8. The box body according to any one of claims 5 to 7, wherein
a through hole is formed in the first sealing surface, a threaded hole is formed in the second sealing surface, and the connecting element passes through the through hole and is in threaded fit with the threaded hole.

9. The box body according to claim 8, wherein
the connecting element comprises a body and a first position-limiting body, one end of the body is connected to the first position-limiting body, the other end of the body is in threaded fit with the threaded hole, the cross-sectional area of the first position-limiting body is larger than the cross-sectional area of the body, and the first position-limiting body is in contact with a surface of the first box body facing away from the second sealing surface.

10. The box body according to claim 9, wherein
the connecting element further comprises a second position-limiting body, the second position-limiting body is arranged between the first position-limiting body and the body, the cross-sectional area of the first position-limiting body is larger than the cross-sectional area of the second position-limiting body, the cross-sectional area of the second position-limiting body is larger than the cross-sectional area of the body, and a portion of the second position-limiting body is located in the through hole and is in contact with the second sealing surface.

11. The box body according to claim 10, wherein
the first box body comprises a first side wall, the through hole is formed in the first side wall, and the first position-limiting body is in contact with a surface of the first side wall facing away from the second sealing surface; and
the thickness of the first sealing member in a natural state is h, the thickness of the first side wall is d, and the length of the second position-limiting body is H2, satisfying 0.3 h+d≤H2≤0.7 h+d.

12. The box body according to any one of claims 1 to 11, wherein
the first sealing surface and the second sealing surface intersect with the horizontal plane.

13. The box body according to claim 12, wherein
the first sealing surface and the second sealing surface are arranged perpendicular to the horizontal plane.

14. The box body according to claim 12 or 13, wherein
the first box body comprises a first end wall and a first side wall; and the second box body comprises a second end wall, the second end wall is arranged opposite to the first end wall along a first direction, the second box body has the second sealing surface in a second direction, the first direction intersects with the second direction, and the second direction is parallel to the horizontal plane, wherein one end of the first side wall is connected to the first end wall, and the other end of the first side wall has the first sealing surface.

15. The box body according to claim 14, wherein
the position-limiting portion comprises a first position-limiting protrusion, and the first sealing member is closer to the first end wall than the first position-limiting protrusion along the first direction.

16. The box body according to claim 15, wherein
the first position-limiting protrusion extends from one end of the second sealing surface to the other end along a third direction, and the third direction, the first direction and the second direction are perpendicular to each other.

17. The box body according to claim 15 or 16, wherein
the position-limiting portion further comprises a second position-limiting protrusion, the first position-limiting protrusion and the second position-limiting protrusion are oppositely arranged at an interval along a first direction, and the first sealing member is arranged between the first position-limiting protrusion and the second position-limiting protrusion.

18. The box body according to claim 17, wherein
the second position-limiting protrusion extends from one end of the second sealing surface to the other end along a third direction, and the third direction, the first direction and the second direction are perpendicular to each other.

19. The box body according to any one of claims 14 to 18, wherein
there are two first side walls, and the two first side walls are arranged oppositely along the second direction; and the second end wall is located between the two first side walls, the second box body has two second sealing surfaces arranged oppositely along the second direction, and the second sealing surfaces are in one-to-one correspondence to the first side walls.

20. The box body according to claim 19, wherein
openings are respectively formed at two ends of the first box body along a third direction, and the first direction, the second direction and the third direction are perpendicular to each other; and the second box body further comprises two second side walls, the two second side walls are oppositely arranged at an interval in the third direction and are connected to the second end wall, and the two second side walls respectively seal the two openings.

21. The box body according to claim 20, wherein
the box body further comprises a second sealing member; and the second side wall has a third sealing surface, the first box body has a fourth sealing surface, and the second sealing member is arranged between the third sealing surface and the fourth sealing surface, so that the third sealing surface is in sealed connection with the fourth sealing surface.

22. The box body according to claim 21, wherein
two ends of the first sealing member are respectively connected to two second sealing members.

23. A battery, comprising:
battery cells; and
the box body according to any one of claims 1 to 22, wherein the battery cells are accommodated in the box body.

24. An electrical apparatus, comprising the battery according to claim 23, wherein the battery is configured to provide electric energy.
